# EUROPEAN PATENT SPECIFICATION

(11) **EP 2 033 082 B1**
(45) Date of publication and mention of the grant of the patent: **27.11.2019**
(21) Application number: 07795182.0
(22) Date of filing: 17.05.2007
(51) Int. Cl.: H04L 29/08, H04L 12/24, H04L 29/12, G06F 9/445

(54) **AUTOMATED POLICY-BASED NETWORK DEVICE CONFIGURATION AND NETWORK DEPLOYMENT**
AUTOMATISIERTE AUF RICHTLINIEN BASIERENDE NETZWERKEINRICHTUNGSKONFIGURATION UND NETZWERKEINSATZ
PROCÉDÉ AUTOMATISÉ DE CONFIGURATION DE DISPOSITIFS DE RÉSEAU ET DE DÉPLOIEMENT DE RÉSEAUX FONDÉ SUR DES POLITIQUES

(30) Priority: 19.05.2006 US 437582
(43) Date of publication of application: 11.03.2009
(73) Proprietor: Trapeze Networks, Inc., Pleasanton, CA 94588 (US)
(72) Inventor: FREUND, Yun, Cupertino, CA 95014 (US); ZELDIN, Paul, Los Altos, CA 94022 (US); BUGWADIA, Jamsheed, San Jose, CA 95123 (US)
(74) Representative: D Young & Co LLP
(86) International application number: PCT/US2007/012195
(87) International publication number: WO 2007/136863

(56) References cited:
- EP-A2- 1 445 893
- WO-A2-00/54149
- US-A1- 2005 059 406
- US-A1- 2005 193 103
- US-B1- 6 336 152
- US-B1- 6 725 260
- US-B2- 6 978 301
- YANG INTEL CORP P ZERFOS UCLA E SADOT AVAYA L: "Points(CAPWAP); draft-ietf-capwap-arch-06.txt", 20041116, vol. capwap, no. 6, 16 November 2004 (2004-11-16), XP015016308, ISSN: 0000-0004

## Description

### FIELD OF INVENTION

This invention relates generally to network device and network system architectures and methods for configuring devices on or for a network and to devices that may be configured by such methods, and more particularly to device and network system architectures and methods for automatically self-initiating and configuring one, a plurality, or hundreds of wired or wireless network devices, including 802.11x wireless switches based on identity, policy and/or other attributes, and to such devices, without skilled network administrator or technician participation or intervention.

### BACKGROUND

Heretofore configuration of a network device or a multiplicity of network devices, such as a wired or wireless network switch and one or a constellation of access point devices and other devices and/or subsystems that may be directly or indirectly connected or coupled with the network switch, have presented at least an economic and often an intellectual challenge to information technology (IT) or network administrators. These challenges may become particularly apparent when the network spans the world including locations in different time zones and where headquarters staff including the IT or network administrator(s) responsible for initial network configuration, network configuration modification, and/or network expansion speak different languages.

While configuring a network device, such as a network switch, is not an inherently difficult task for a trained IT or Network administrator or even a technician, it does require a level of training, skill, and understanding of the network device characteristics, network configuration, device characteristics, and perhaps network software, and often an ability to diagnose and troubleshoot an apparently non-connecting, non-communicating, and/or apparently non-functioning device or network, such as for example, when there may be two network devices on the network that for initially unknown reasons appear to have the same or conflicting IP addresses.

In some situations, it may be possible for an information technology (IT) or network administrator to consult with a somewhat technically untrained lay person, such as a worker on the floor of a factory or warehouse, an office administrator, or other non-IT person, to configure one or a couple of devices by talking over the telephone perhaps with the help of a computer link, however doing so for a more than a few devices or indeed for dozens or hundreds of devices would be so administratively time consuming and costly that it would be impractical.

Another attempted solution has been to have the network devices to be deployed at a site remote from the location of the network IT administrator, first sent to the site where skilled IT administrators are physically resident so that the network devices may be pre-configured before being reshipped to their ultimate remote location where they will operate. This may sometimes be referred to a staging or partially staging the devices or network.

Yet another possible solution has been to pre-configure the devices with their required configuration information at the place of manufacture so that they may be shipped directly to the remote site for installation, however, this requires the expertise and higher cost associated with a customization for each device so configured, and does not solve the problem of further configuring additional devices in a device tree starting (or ending) from the configured device. In other words, at best this approach may partially satisfy the needs of an entirely static network configuration. It does however present a security problem since the configuration information including any security information required for access to the network would be exposed at the point of manufacturer and susceptible to compromise and may then later be exploited so that unauthorized persons or entities may gain access to the device and the network.

These and other problems become particularly acute when the network device to be configured is a wireless network device and where non-secure communication of device configuration and/or protocols used by the device and network would expose the network to compromise and vulnerability to outside attack.

For these and other reasons there remains a need for a device structure, network architecture, and methods for configuring one, a plurality of, or indeed hundreds of similar or different network devices that are simple, reliable, and secure.

Draft-ietf-capwap-arch-06 relates to architecture taxonomytor control and provisioning of wireless access points (CAPWAP)

WO 00/54149 A2 relates to methods and systems for reduced configuration dependency in thin client applications.

### SUMMARY

An object of the invention is a method for configuring a remote device as claimed in claim 1. Another object of the invention is a network device as claimed in claim 8. Preferred embodiments are covered by the appended dependent claims.

### BRIEF DESCRIPTION OF THE DRAWINGS

FIG. 1 is an illustration showing an embodiment of the inventive system showing elements of the headquarters or management side system including a management side server having network configuration functionality and an exemplary network device. While the network device may be any type of network device or subsystem, here the network device is shown as remote wireless network switch on an 802.11x network.
FIG. 2 is an illustration showing an embodiment of an exemplary procedure for a network device requesting and receiving a configuration information or data set from a system management configuration server.
FIG. 3 is an illustration showing an embodiment of a wireless network device having a recessed mode selector button exposed on an outer surface of the switch so that a person may either leave the switch in a first position to maintain a persistently stored configuration in the device or to press the button during a power-on, boot, or other reset procedure to cause the device to request a new configuration data or information.
FIG. 4 is an illustration showing an embodiment of an exemplary management side procedure for causing a valid configuration to be retrieved from a storage in the management side server or generated by the management side server and sent to the remote network device.
FIG. 5 is an illustration showing an embodiment of an exemplary network device side procedure for causing a valid configuration to be received by and stored in the remote network device.

### DETAILED DESCRIPTION OF EMBODIMENTS OF THE INVENTION

The invention provides secure system, device, method and management side and device side procedures, as well as computer programs and computer program products that provides for the automated network configuration of network devices. Network devices may be of any type, such as wired or wireless network switches, network access points or mobility points, routers, and/or other network devices, subsystems, or the like that require or benefit from being automatically configured with a network device or subsystem configuration, but to avoid the repeated listing or enumeration of each possible network device of subsystem type throughout the description, embodiments of the invention are primarily described relative to wireless network devices or switches. In one particular non-limiting embodiment the network device comprises an auto-configuring or self-configuring wireless network switch such as a wide area network (WAN) or local area network (LAN) switch.

The invention provides an ability to send a network device, such as a wireless network switch, to a local or remote site and permit a person without any particular skill or training to merely plug the device into a network connection, such as for example for an Ethernet cable to a plug-in connector (such as to an RJ-45 port connector) on the case or housing of the device, press a button while switching on or otherwise applying electrical power or initiating operation of the device, and as a result of these actions cause the device to send a message to a predetermined network server over the Ethernet network and in return receive a full and complete configuration information or data set (or a supplemental data set to augment what is present) to place the network device in operation on the network and not requiring any further interaction with the network or a network administrator. This methodology may be repeated for any number of such network devices and may even, for example, be repeated for hundreds of network devices and geographically diverse installation sites each being distant from the central or headquarters management side server. More than one server, though not required, may also optionally be incorporated into the system operation and/or configuration either for purposes of redundancy or capacity. Although a server is or may be described here as being the configuration server, it will be appreciated that the configuration information serving functionality may be provided by a dedicated configuration server or my a server that provides for various other content, data, and information serving functionality, as well as the configuration information serving.

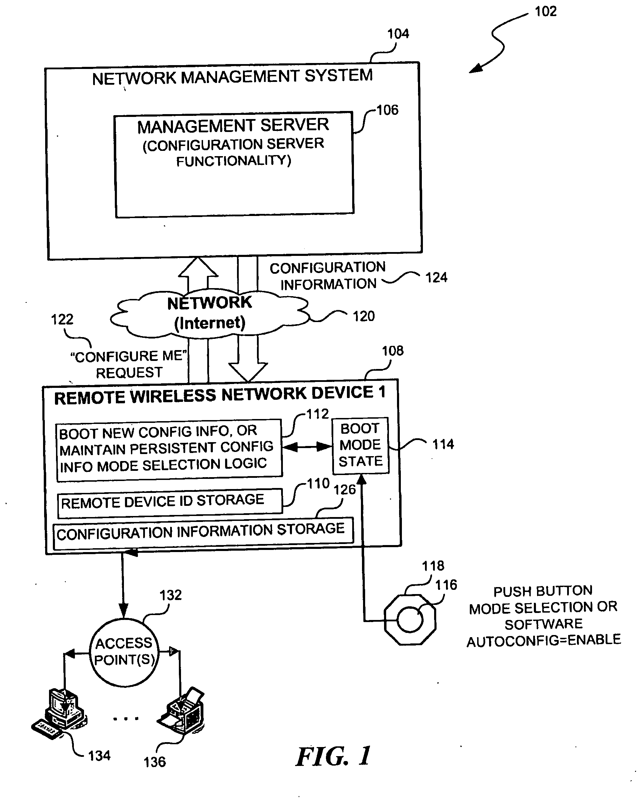

With reference to FIG. 1, there is illustrated a functional block diagram showing a simplified embodiment of the inventive system 102. In this configuration, network management system 104 which includes a management server 106 having a device configuration server functionality may be coupled for communication over a network, such as the Internet 120, to a network device 108, here shown as a first remote wireless network device 1. It will be appreciated in light of the description provided herein that typically, a network will include a plurality of network devices 1, 2, ..., N and that a single network device is shown here to simplify the description. It will also be appreciated that when there are a plurality of network devices, they may be of different types or have different software version or characteristics or functional requirements and may require different configuration information. In this embodiment the remote wireless network device 108 is a wireless network switch. Network switch 108 may as shown here be coupled to one or a plurality of access points 132 which may themselves couple to one or more devices 134, 136 such as for example notebook computers, PDAs, printers, or any other network device. In one embodiment of the invention the management server may be but is not limited to a Ringmaster™ Server made by Trapeze Networks of Pleasanton, California.

Remote wireless network device 108 may include storage 110 for a remote device identifier, which storage may store one or more parameters that may uniquely, or even locally with the network, identify the physical or hardware device within the system 102. Remote wireless network device 108 also includes logic or processor 112 and program information for booting the network device 108 either with a new configuration information or when desired or required maintaining persistently the configuration that is already been stored in the network device 108. Typically the processor will include a coupled internal or external RAM memory. A configuration information persistent or non-volatile storage 126 is provided for storing configuration information. Persistent storage for program instructions and/or other parameters, including for example a network configuration information source identifier from which the network device will obtain its configuration. Clearly, if the network device has not previously stored network configuration information than it may be required that the network device 108 the loaded with new configuration information before the device is able to function properly on the network.

Embodiments of the inventive network device 108 provide functionality at the time the network device 108 boots or is reset to either maintain the configuration information in the network device that was previously loaded. Whenever a button 116 is pressed during boot or optional reset procedure, or when an optional autoconfiguration = "enable" state is set by or in software and the state stored prior to booting, a sequence of events is initiated during which the network device requests from network management system 104 a configuration information ("configure me") request 122 and subsequently receives a configuration information item or information set requested 124 from the network management system 104. The boot or mode state 114 provides storage and an indicator so that at the time the network device boots a query may be made of this state so that the appropriate decision to request new configuration information or to maintain persistently the old configuration information may be known. The state may be stored in a memory or may be indicated directly by other physical property such as the state (for example, open or closed, or high or low impedance, high or low voltage, or the like) of a switch, line, or other physical element. The network device is programmed to take or execute different paths and execute different boot sequences depending upon the state of the boot mode state 114 stored. In at least one embodiment, the inventive network device is capable of autonomous operation.

The invention is not limited to any particular configuration information item or set of configuration information. Embodiments of the invention may provide for requesting only a single configuration information item or a plurality of configuration information items. In some embodiments of the invention the configuration information is referred to as a configuration data set, and this is understood to possibly be a single data item or a plurality of data items. Configuration information or data sets may be complete such as may be needed in an unconfigured network device or partial or supplemental such as may be need in an incompletely configured network device or where although complete, the configuration information in a network device needs to be changed or updated.

In one embodiment of the invention, the request may include at least one of a device Internet protocol (IP) address, a device class, a device site, a device location, a network mask (netmask), a network identifier, a device type to be configured, a software version identifier, a firmware version identifier, a data of manufacture, a DHCP source indicator, a pre-configuration fixed address indicator, a serial identifier (SID), and any combination of these. The software, firmware, or device hardware version tells what server what the device is capable of or can do, so that version based configuration information may be provided and is primarily (but not exclusively) of benefit for policy based configuration, as different versions may have different or advanced features not available or operable in other versions. When device identification based configuration is used, the device identifier such as the device serial number may provide unambiguous information as to any one or combination of hardware, software, and firmware characteristics of the network device.

Different embodiment of the invention may provide for different information or data to be provided in any particular configuration information or configuration data set that is requested by and subsequently sent to a network device.

One embodiment of the invention provides as a guiding principle for determining what configuration is needed as either a complete configuration information data set or as a supplemental configuration information data set is that the configuration information or data set should be sufficient to permit a client device or user to be able to connect with or otherwise access the network in the manner intended. Where for example, the access to the network is to be via a wireless connection and the network device is a wireless switch, the client device such as a notebook computer or other information appliance will access the network wirelessly via a wireless access point device, and the wireless access point device will be coupled with the network switch either via a wired or wireless connection or communications link. In this exemplary situation, configuration information concerning the access point radio-frequency or other radios (either via the so called networks supported by the access point in the context of Microsoft Windows operating system environments, or more generally in the context of SSIDs) should be provided as well as configuration information as to the identities of persons, users, user IDs, machine IDs, or other entities that should be allowed to or disallowed from connecting to the network via the network device (such as through the access point and switch).

In one embodiment of the invention, the configuration information sent to a network switch also includes configuration information for the access point or access points that communicate with the network through the switch. In another embodiment, the configuration information or data set defines how to configure these access point devices. In another embodiment, the configuration information or data set defines how to verify a user or client device. In still another embodiment, the configuration information or data set may define relationships of a one network device (e.g., a first switch) to another network device (e.g., a second switch) or to a plurality of switches to each other.

Relationships may for example, take into account mobility domains where a mobility domain is a collection of switches that know about each other and about each others sessions. Mobility domains may be provided for the purpose of permitting hand-offs during roaming or physical movement of the device or other devices coupled with the network device such as client machines possibly including computers, PDAs, and the like. Relationships are valuable so that they permit relationships and hand-offs if moving around from place to place. In this way the system and network can also provide virtual LANs with the user and client device staying on the same VLAN even though roaming through an area.

In one embodiment, where the network device comprises a switch, the access point and switch are configured to permit all client devices that can find the network or SSID to connect to it. Frequently, access points will broadcast their network identifier and/or SSID. Therefore in a situation where the owner, operator, or other network administrator entrusted with controlling access to the particular network had chosen to permit all users that wanted or requested access to the network, such as to a default LAN or virtual LAN (VLAN), to be able to access the network, then the configuration information may advantageously specify that any user of user's machine may connect to and have access over the network via that access point and switch.

More typically, the network administrator may choose to restrict access to the network. In this situation, the configuration information or data set sent to the device (the network switch and access points, in this example) will specify the identities of potential client devices that are permitted access.

In this situation, embodiments of the invention will provide for configuration information about what client devices or users of client devices may be validated to the network, as well as what wireless protocols are enabled, any authentication information, provide a new fixed IP address if the IP address that had been used had been established by a DHCP or other entity, and/or any other information, parameters, or data that it is useful or advantageous for the network device or other devices coupled with it to have for purpose of the intended operation.

Essentially, sufficient configuration information needs to be present on the network device to permit getting clients (such as for example wireless clients) onto the network or SSID that they belong on (and not on other networks or SSIDs that they don't belong on) with the correct level of security (if any).

On an access point (AP), the access point advertise or broadcast the networks (in a Microsoft Windows based context) or SSID (in more general wireless networking context) that they support. In general, each access point radio can broadcast a single SSID or any number or plurality of SSIDs. The access points and/or clients connected to the SSIDs broadcast the SSID and broadcast the attributes of the network (such as dot 1X, key authentication, and the like or other attributes). The attributes broadcast by the client device need to match or at least have common elements with the attributes of the switch to which the client devices connect to the network and may further need to be able to match these and/or other credentials to determine if the client device should be allowed on that network (SSID). The storage and/or matching of the parameters or attributes may be done on a server or locally. If the switch does not know about the user and/or the users client device, then it cannot perform this look-up and matching, so that in embodiments where access is controlled in some way, the configuration information that is sent to the network device may include user or client access attributes or configuration information.

Configuration information may also specify relationships amongst network devices, such as switches, so that for example a roaming user or client device can maintain proper connection to the network even though the client device is moving from the radio range of one access point and/or switch to another one so that communication hand-off from one to the other may occur seamlessly, while at the same time not permitting hand-off or connection to a network that the user or client device is not entitled to connect to in spite of the device being in good radio frequency range of the access point or switch for that network or SSID.

It will be appreciated that in both of these exemplary situations, one involving unlimited access and one involving limited access, the configuration information or data set includes some client or other user identity information. However, in the event that the network device may be partially programmed or staged to specify either permitted or prohibited access, even this information or data need not be included within the configuration information that is sent to the requesting network device. It will be appreciated that the invention provides structure and method for a device to send a request for configuration information and to receive configuration information back from a different device or system, such as from a sever computer via a network, whatever that configuration information may be. Embodiment of the invention may also be used to confirm, update, check for updates, or validate all or only a portion of configuration information or data that was previously stored to the network device. Therefore the invention is not limited to any particular configuration information or configuration data set, nor to the manner in which the configuration information was generated or stored.

The above examples of networked device configuration information items and data sets are merely illustrative examples, and not limitations of the invention. It will be apparent that the configuration information request message may request any information and the server's response to the message may be full, partial, or a single configuration update to a stored configuration in the requesting network device. The configuration information sent may also be completely controlled by the centralized (or distributed) configuration distribution authority represented in the descriptions here as the management side configuration server.

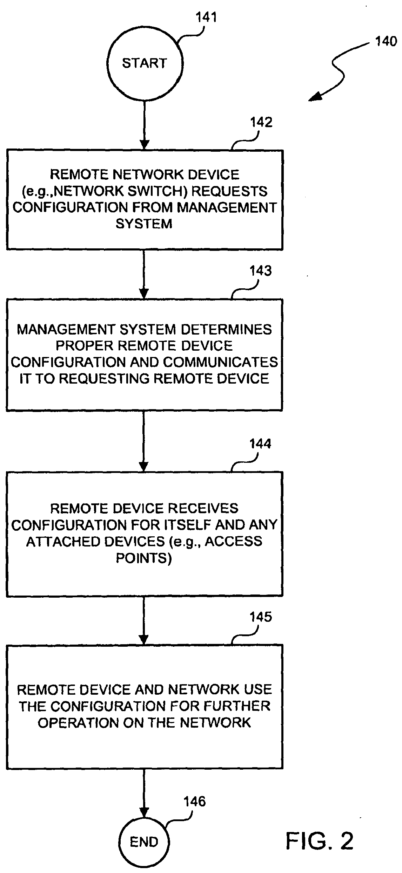

With reference to FIG. 2, an overview of the steps involved in requesting and receiving configuration information according to one embodiment of the invention is now described. The procedure begins at step 141 and thereafter the remote network device (for example a network switch) requests configuration information from the management system (step 142). Next, management system determines the proper or appropriate remote device configuration information and communicates its to the requesting remote device (step 143). The remote device then receives a configuration information for itself and may optionally but advantageously also receive configuration information for any attached devices, such as for example for one or more access points coupled with the remote network switch (step 145). Finally, the remote device and network use the configuration information sent or pushed down to the remote device for further operation on the network (step 145), upon which the procedure ends (step 146). Where network device information is sent to and/or used by the management side server, the network information may be either or a combination of a network device hardware information, a network device software information, a network device location information, a network device requester information, any other parameter that identifies a basis for establishing an operable configuration, and/or any combination of these.

It may be appreciated in light of the description provide here that the when the requesting network device sends its request message out, upon receipt the management system performs either a configuration data base look up or a configuration information generation based on one or more of the network device identification, network configuration policies, and/or on the basis of any combination of these with possible other factors. In doing the look-up or generation, the management side system may take into account the existing preconfigured policies, rules, preferences, existing configuration, legacy devices and/or any other parameters or characteristics that may or should impact the network device configuration, on the network that the management side or central administration has set up. It will create the right configuration that needs to be sent back to the network device. To the network device, it looks like it received its full configuration. For example, the full configuration for a network device that is or includes a network switch may include configuration information as to how to run its access points (APs) or mobility points (MPs), what SSIDs (service set identifiers) to provide, what Virtual Local Area Networks (VLANs) to configure, who to allow access to and what that access should be, and any other information that provides the desired operation of the configured device. These are merely non-limiting examples of the type of configuration information that a network device such as a switch might receive.

The description provided relative to an exemplary system configuration in FIG. 1, and an overview of the methodology presented in FIG. 2, provide an overview of selected embodiments of the invention. Additional description is provided hereinafter that describes alternative configurations for both the management system 104 the network device, such as a remote wireless network device 108, as well as various embodiments of the overall method for communicating between the management system and the remote network devices including procedures executing within the management system alone, procedures executed within a remote wireless network device alone, and additional procedures that include components executed by a combination of the management system 104 and one or more of a plurality of remote wireless network devices 108.

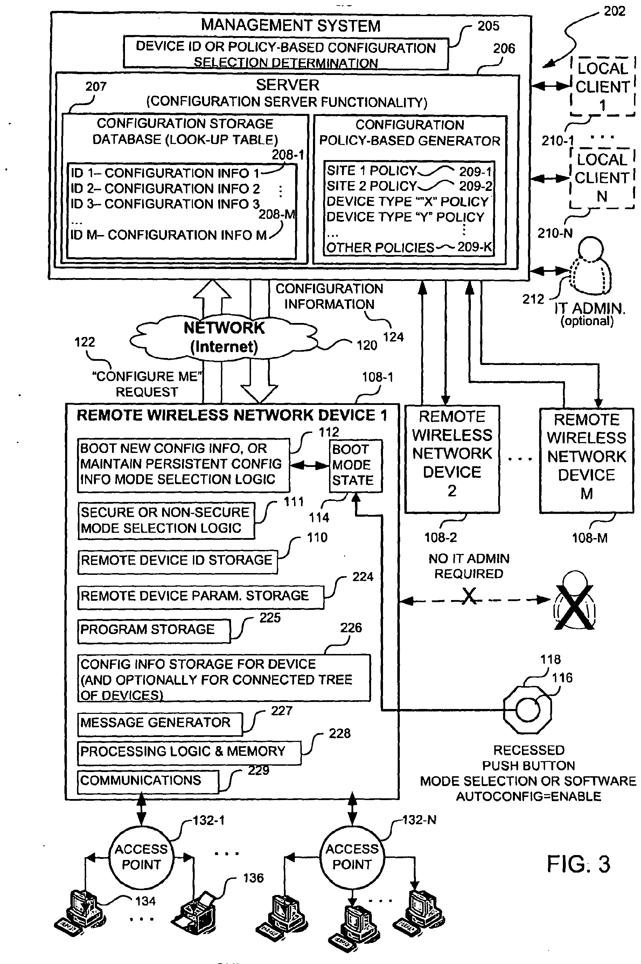

With reference to FIG. 3, there is illustrated and additional embodiment of the inventive system showing both management systems side structure 104, and intermediate network such as the Internet 120, and a plurality of network devices 108-n where the or each of the plurality of network devices 108-m is a remote wireless network device. Advantageously, the wireless devices may conform to one of the WI-FI or 802.11 wireless protocols, but the invention is not limited only to this protocol or to extensions, enhancements, and improvements to this protocol.

Various feature is in embodiments of the invention are now described, including, but not limited to aspects of the invention that are particularly useful when replacing a failed network device, application of the methods and structures of the invention to the rollout or deployment and configuration of new sites having hundreds of network devices to be configured, aspects of the invention pertaining to central control and/or policy-based control of network device configuration, aspects of the invention pertaining to novel characteristics of the physical hardware switch itself, aspects of the invention that are particularly advantageous when scaling the method to large numbers of devices, aspects of the invention pertaining to mutual device security authentication and encryption, application of the method not only to configuration of the device but also to the tree or hierarchy of other devices coupled with the configured device, aspects of the invention applicable to maintaining a persistent or sticky configuration, aspects of the invention pertaining to flexibility in choosing and pushing either a hardware based configuration or a policy-based configuration to the device, and of course application of the automated set-up and configuration procedures to drop-shipped network devices. These aspects may be combined and used synergistically in various ways.

Attention is now directed to some exemplary applications of the inventive system, device, and method where the invention provides particular advantages.

One common situation in the networking space is to have a network device fail, such as a network switch. This failure can be particularly problematic at a remote site where no network administrator or IT professional is available. According to one embodiment of the invention, a device identifier (and/or network policies) used to determine the configuration information that is to be sent to or pushed to replacement device. Under this replacement scenario, it would be possible to have a network device vendor or manufacturer pull a box containing the replacement device off of their inventory shelf, and without opening the box or performing any configuration of the device, drop ship a replacement network device using for example an express delivery service, directly from the manufacturer or vendor to the replacement site. At the same time, the manufacturer or vendor may inform the buyer as to the device identifier so that an entry may be made into the configuration information database ready for configuration information retrieval when it receives a request. Anyone at the replacement site then opens the box, disconnects the Ethernet cable from the failed network device, reconnects the Ethernet cable into the receptacle on the replacement device, plugs in electrical power (if an on-off switch is provided on the device) and at the time the on-off switch is switched from an off state to an on state, holds down the boot mode button on the device so that the replacement network device sends a message to the management side server requesting configuration information.

It will also be appreciated that embodiments of the invention may utilize a combination of network device identity and policies to determine one or any set of network device configuration information, and that as with either identity based configuration or policy based configuration, the use of a combination of identity and policy based configuration may be implemented by pre-computing and storing such configuration in a database, computing it in real-time or substantially real time or dynamically determining configuration information upon receipt of a request for such configuration information or data set, or by any combination of pre-stored and real-time or dynamically determined configuration. Dynamically determined information for one device may even be stored and used or partially reused for a similar configuration with any necessary changes being made to customize the configuration information to the new request or requestor.

The replacement network device knows to send its message to a particular server at a particular IP address location because at least in one embodiment, it is programmed at the time of manufacture (or if staged in advance of shipment, when being staged) to connect to a particular notorious DNS Domain Name System (or Service or Server), an Internet service that translates domain names into IP addresses.

More particularly, finding and ultimately connecting to a source of configuration information, such as a configuration information server, may be implemented in a variety of ways. In one embodiment, a particular name is identified to the network device, and that name is looked up or queried in the context of the local network or other defined network.

For example, in one non-limiting embodiment, when the network device powers-up and begins to boot or on a reset boot or other initiation phase, and is activated in an autoconfiguration mode, if it does not have an IP address (or optionally, even if it does) it sends a DHCP request to a DHCP server to obtain a first or a new IP address (because it may not have an IP address when it wakes up for the first time), it will also be assigned or otherwise be identified with a default router, and it will be assigned or otherwise identified to a DNS server, and finally according to one embodiment it will receive a domain name from the DHCP server. Alternatively, some or all of these may be preconfigured into the network device, such as at the time of manufacture or during some pre-deployment staging phase. This alternative mode may be useful if there is a possibility where their will be no DHCP server available or accessible during the setup, deployment, or roll-out.

Next, a domain name lookup is performed on the server that has been identified to the network device as the sever to query during the autoconfiguration using a well known or other identified or notorious name appended to or pre-pended to the domain name. In one embodiment of the invention this well known name is "wlanconfigserver"., but the choice of name itself is not important. Furthermore, one does not actually have to know the address, it is enough to use the domain name to find the appropriate server.

That domain name will have or identify a valid IP address that applies to the particular DNS domain. DNS is an acronym for Domain Name System (or Service or Server), which is an Internet service that translates domain names into IP addresses. Because the DNS system is actually a network onto itself, if one DNS server doesn't recognize or know a particular domain name, it asks another DNS server, and so on, until the correct IP address is found.

The requesting network device is instructed to use this name to find the server. Typically, the network administrator or information technology (IT) group will have added that name with an address into their local DNS database. In this way, only the name is needed and the name can identify the address that locates the server. This DNS mechanism may readily be set up form a central or headquarters site and then sent out to various proxy servers if they exist so that this process as well may readily be accomplished remotely from the location of the device installation or deployment.

The known or notorious name (or other identifier) is programmed or otherwise loaded or stored into the network device before deployment, and an address is obtained during deployment (during the autoconfiguration process) by looking up the address based on the name using a DNS lookup. The DNS lookup is performed by the DNS server that was identified or provided by the DHCP server, and the domain name is provided by the DHCP server.

When, a situation arises when the name is not available in the DNS server then at least this portion of the process would need to be preconfigured (such as prior to shipment or during a staging phase) so that the remaining configuration may be obtained from the server over the network. Note that in this exemplary case, all of the network devices may be preconfigured with the same name information so that batch preconfiguration using a relatively simple procedure, small data set, and low skill level personal may be utilize when desired.

In another embodiment, the manufacturer or vendor may advantageously open the network device shipping box and program the network device to send a message to an IP address or server identified by the entity purchasing the replacement network device. In yet another embodiment, where the entity needing to replace a failed network device, maintains an inventory of spares, the entity may program a replacement network device so that it knows what IP address to contact to reach the central or other management side server for each of the spares, the entity may then simply pull a spare out of their inventory and ship it in the same manner to the site where it is needed. As the programming may be done in advance of the need for the replacement, there is no urgency involved, and typically no reason for a network administrator or IT professional to become involved. Note that it is only the IP address of the server to contact that need be programmed or otherwise stored in the replacement network device, and that the other configuration information is still downloaded to the device when it is installed. Therefore the network administrator may for example, purchase ten switches to use as replacement spares, program each with the server IP address to use with the request, and put them back on the spares shelf until needed. No customization for their ultimate location is required as each will obtain full configuration information upon receiving a response to its request once installed.

Once the management side server receives the request message it optionally authenticates the requesting network device (such as an initial authentication using the network device unique hardware ID), and sends the configuration information to the requesting network device. Therefore, it will be appreciated that virtually no expertise is needed to configure the replacement network device.

Although it may be desirable to configure the device based on the device identifier, in other embodiments of the invention it may not be advantageous to set-up or configure the device based for example on the device serial number, security identifier (SID), or other identifier associated with the physical hardware. Even though this may be possible to do so, it may not be as efficient as other methods for replicating the configuration of the previous failed device. This is a legitimate approach, as well as the approach that may be preferred in a number of network configuration situations.

However in other instances, when such failure occurs, it may be preferable that the replacement device be set up exactly the same (or substantially the same when some hardware, firmware, or software version variation requires or benefits from some incremental change to that set up) as a failed device it replaces. In one embodiment of the invention, there may be a set of network configuration policies that are used in whole or part to set-up, configure, and operate network devices. These policies may also take into account a particular device identifier or may utilize device type or other characteristics. Therefore, according to one embodiment, rather than tying configuration of the replacement device to a physical identifier associated with the device, the configuration of a failed device replacement device may be tied to the physical place or location or alternatively to the policies applied to devices in that location or environment so that it has the proper operation and association with the environment and other devices in that physical place or environment. It will be appreciated, that characteristics of the device itself may also be taking into account by the policies that are applied to the configuration and operation of the device.

One of the attributes of the network typically associated with a physical place are the subnet addresses and the Internet protocol addresses that are associated with the location and the subnet. Using this localized information, the replacement device may be configured based on the standard policies (or optionally on customized policies) applied to devices of the same or similar type in that location or environment. Different devices such as wireless network switches may receive different configuration information than wireless routers or access points, but it may be the policies that determine within a type or class of device what the configuration should be not the individual device identifier itself. Location may for example mean a particular company office location or building, a particular city or other political jurisdiction, a particular operation such as a research laboratory in a research and development complex versus a warehouse facility collocated in the same complex. Security features, possibly including network access lists, may also be a form of policy based configuration. Therefore the idea of place or location relative to policies may also be different functional activities at the same location.

The ability to configure a network device based either on its physical identity, or one the basis of network policies applied to devices at the location, or even a combination of device identity and policies, each give added benefits and alternative flexibility.

Embodiments of the network device, such as a wireless network switch may interoperates with the server, such as the RingMaster™ based server and network software made by Trapeze Networks of Pleasanton, California, or with other servers and/or software to configure the devices and bring up the configured network devices and the network system automatically.

In accordance with one embodiment of the invention, system, device, and method are provided to permit automatic and touch-free or substantially touch-free configuration of a network device at a location to be configured to operate on the network without the on-site participation or involvement of a technician, information technologist (IT) administrator or other trained professional. Touch-free operation means that the installer of the network device only needs to connect the network device to a communication link, such as a wired or wireless Ethernet or other network, that can reach a source of configuration. This information source may typically be a network server (such as the management side server already described) and the network will be or include the Internet connected to the network device using an Ethernet cable or wireless equivalent. Once the network device has been connected to a network that can reach or connect to the configuration information source and power is applied to the network device so that it boots its operating program for operation as its particular type of network device, such as a network switch, the network device is programmed to contact its configuration information source and get its configuration information and then self install on the network without any other assistance or intervention. In another embodiment, someone must press (and optionally hold) a button or switch or other electrical or mechanical means for altering a logic state so that the network device will be instructed to contact the source of configuration information rather than use the already stored configuration information (if any) within the network device memory or logic.

This aspect of the invention is particularly advantageous in situations where for example, a network device at a location remote from a headquarters facility where the IT administrator or other IT technicians are resident has failed and needs to be replaced, or where a large number of network devices need to be rolled out in a new facility and even where an IT administrator or technician may be sent and made available, the travel and on-site time involved and the resulting costs increase the time involved to complete network roll out. Given these two extreme situations, one situation involving a single failed network device that requires replacement and the other situation requiring installation and configuration of an entire network either at a site where one or more IT professionals are available or where none are available, it will become apparent in light of the description provided herein that the inventive system, device, and method may be applied to situations that are intermediate between these two exemplary situations.

As the structure of the inventive network device may be replicated to an unlimited number of devices (such as a few hundred or a few thousand at a time in practical terms), a management side network server may be configured to interoperate with any number of such devices for the purpose of configuring the device(s), and as the method, procedures, and communications involved in configuring a device may typically involve the management side network server and a single network device at a time, embodiments of the invention are first described relative to a single network device. It will then be appreciated in light of the description provided herein that the system may be extended to include and interoperate with any plurality of devices, including for example systems having only a few devices, to network configurations that have tens, hundreds, or even thousands of devices. Furthermore, the network devices to be configured may be of different physical types, may require different network configurations, and may be at different physical locations, to name only a few of the possible variations.

Two primary strategies for configuring a network device are described herein. The first strategy involving configuration of the network device based on a physical characteristic of the device, such as for example, a device serial number, a device IP address, a secure **ID**, or any other identifier associated with the physical hardware of the network device. This configuration approach is referred to as identity-based configuration or IBC. The second strategy involves configuration of the network device based on an applicable network policy or policies, where for example, the policies may be specific to the location where the network device is being installed or replaced. The network policies may also take into account the network device type, and/or other physical or functional aspects of the network device. This second configuration based at least in part on network or management policies is referred to as policy based configuration or PBC. One or a plurality of policies may be utilized in selecting, generating, or otherwise determining the configuration information or data set to be sent to a particular network device (the primary network device) and such policy or policies may also be used to determine the configuration information or data set sent via a particular network (a primary network device) to other devices, possibly including other network devices (secondary devices or secondary network devices), that are connected with or coupled to the network device. As an example, a access point device is a secondary network device to a network switch which is a primary network device.

Both identity-based configuration and policy-based configuration share some common structural, functional, and operational aspects so that to the extent possible, both will be described together with differences described as required. It will however be apparent that the policy based configuration approach has some distinct advantages over identity only based approaches It is believed that this descriptive approach will provide the reader with the best understanding of the core of the invention as well as an appreciation for variations that the afore invention supports.

Recall that with reference to FIG. 1, the invention includes two principal hardware components, a network device 108 that requires configuration information 126, and the server 104 or other source of configuration information 107 that the network device 108 can contact over a communications link 124 such as the Internet or other network to request 122 configuration information 124 stored (for example based on a device identity) or generated (for example, based on predetermined or dynamically determined policies) at the server so that it can be sent over the communication link to the particular network device 108 making the request.

With reference to FIG. 3, an alternative embodiment to the system illustrated in FIG. 1 is shown having additional management system 204 and device 108 detail shown. The FIG. 3 embodiment includes structures that may in some instances only operate or be present with the identity-based configuration (IBC) such as the configuration storage database and look-up table, or only with the policy-based configuration (PBC) embodiment such as the configuration and policy-based configuration generator 210 so that either of these may be seen as being optional elements; however in at least one embodiment of the invention both are present so that the network administrator has several options and flexibility to choose the option that best suits the network device configuration at the time. It may also be noted that the system and device may optionally provide for manual configuration of any network device through either the server or through a local interface to the device.

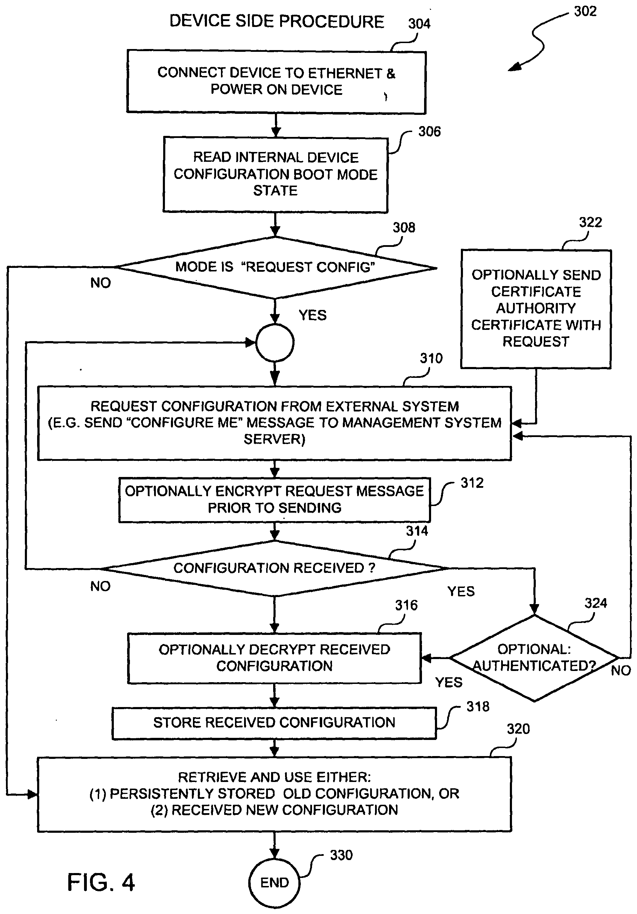

An embodiment of the inventive method for configuring a device is now described from the perspective of the network device 108 relative to FIG. 4. As described earlier, one of the primary benefits of the inventive system device and method is ability to connect and configure a network device to the network without the involvement of a skilled or trained IT administrator. In fact, the invention provides for configuration of a network device with the only requirements are to connect the physical network device to the network such as to the Ethernet and to power on the device (step 304). Next, the procedure reads the internal device configuration boot mode state (step 306). The boot mode state determines whether the network device 108 already has and stores a configuration information that the device wants to retain and utilize or that the network device 108 has no configuration information or wishes to obtain an updated or new configuration information. In one embodiment of the invention, the boot mode state is a flag, bit, byte, or any other indicator capable all of identifying a first and second states. If the indicator identifies a first state then the device will take actions to request and obtain new configuration information from an external source such as the management system 204 side server 206. However, if the indicator identified the second state then the device will not request configuration information and will retain the configuration information it already has and stores.

When the boot mode state indicator is in the second state indicating that the device does not needed to obtain updated our new configuration information device side procedure 302 provides that the network device 108 is ready to operate on the network and uses they persistently stored old configuration information for continued operation in the network (step 320) and a device side procedure ends (step 330).

When the boot mode state indicator is in the second state indicating that the device needs to obtain initial, updated, or new configuration information and request for configuration from the actual system is sent (step 310). In one embodiment of the invention, the request for configuration is sent using a "configure me" message to the management systems side server 206. Optionally, but advantageously communications between the network device 108 and the management system 204 are conducted using certificate based or other authentication (step 322) as well as encryption 312 (at least for sensitive information) for the messages passed between the network device and the management side system.

It may be appreciated that authentication (step 322) and encryption (step 312) are important for maintaining a secure network because the configuration information itself as well as the protocols used on the network contain or may contain secret information such as keys and the like that if intercepted and known by others would subject the network to attack and compromise. It will however be appreciated that neither authentication nor encryption are required for operation of the inventive system, device, or method and that they are optional features a prudent network architecture and administrator would implement to protect the network.

There is authentication and encryption that can be enabled in a mutual sense. If want to protect from having someone outside coming in and sucking down the config from the management server is to require mutual authentication on both sides. The management side server uses a certificate based authentication of the network device to make sure that only network devices that are trusted by the management server based on the certificate authority certificate are allowed in to talk to or otherwise communicate with the management server and more particularly to request the configuration information by sending the "configure me" message to the server. On the reverse direction (when the management system talks to the network device), an encryption based on secure socket layer (SSL) may be used and in this case an authentication based on a username and password scheme my be implemented to make sure the management scheme that is configuring the network device is allowed to do so. This may be done by an administrator once so that the management system already knows what the credentials are for the management system to be able to securely configure the network device. Therefore, it will be appreciated that not only does the inventive system, device, and method provide for a great deal of flexibility in the configuration of network devices, but it may also operate in an environment were security is maintained and mutual server/device authentication with encryption on all or a defined subset of the messages may be provided.

The network device 108 will then wait for the management systems side server 206 to respond and said the requested configuration information. It may be noted that the management systems side server 206 may store the configuration information 208 in the same form or in a somewhat different form they and the form in which it is communicated to network device 108 and that network device 108 may yet and still store the received configuration information and a different form or format band that in which it was received. The management system 204 may also or alternatively have and store different configuration information from which the configuration information that is sensed two and Stored by network device 108 is derived. Independent of possible differences between the configuration information available for a network device on the management systems side server 206 and the configuration information stored and used by network device 108, it will be appreciated that the configuration information received by and stored within the network device completely satisfies its need for configuration information so that the network device is able to operate in its intended manner on the network.

In the event that the configuration information requested is not received within a predetermined time inventive device side procedure 302 may submit a new request or query for the information (step 314) and continued to monitor receipt of the requested configuration information and/or make new request for the configuration information until that request is satisfied. The device side procedure 302 may also optionally but advantageously require authentication (step 324) from the server for any configuration information received, and may require decryption when the configuration information and/or accompanying message were encrypted. Encryption, decryption, and certificate authority based authentication procedures are known in the art and are not described in additional detail here.

Once the configuration information has been received the configuration information is stored (step 318) into a memory or other storage in the network device 108. Subsequently, the configuration information may be retrieved and used as required for operation of the network device (step 320), and the device side procedure 302 and (step 330).

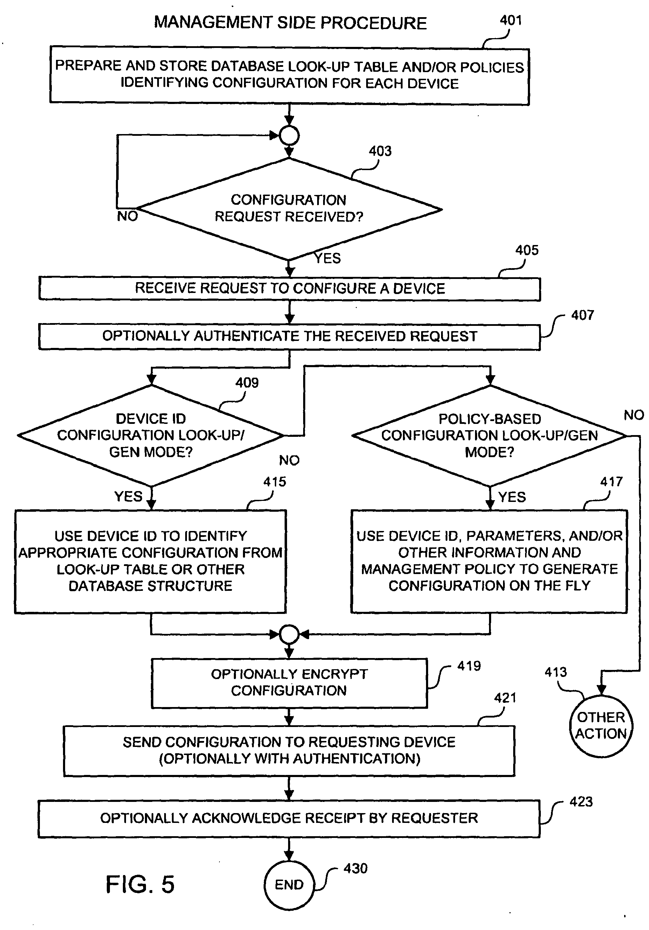

The corresponding management side procedure 401 is now described relative to FIG. 5. It'll be understood that prior to the management side system 204 having an ability to serve or otherwise send or communicate the configuration information to the requesting network device, the configuration information must be available on the management systems side server 206 (except that according to an alternative embodiment, the configuration information may be generated on-the-fly or in real-time or substantially in real-time upon receiving the request). Therefore the management side procedure 401 includes the step of preparing and storing a database, which may be a lookup table database, that identifies the configuration information for each physical network device ID (step 401).

In the alternative embodiment where configuration information is determined or provided based on network policies, the database for example may include or utilize one or plurality of policies that are used to provide or generate an appropriate configuration information for a requesting network device based on the network policies and parameters associated with the requesting network device. For example, parameters that may be used in conjunction with policies might include, but are not limited to, and location parameter, a device type parameter, a device class parameter, an office or location specific function parameter, or any other parameter or characteristic of the network device, network device site, network device location, or any combination of these parameters, it may be used in conjunction with policy to determine the most appropriate configuration information to retrieve from a storage or to generate on-the-fly for use by a network device.

The network having either prestored network device configuration information prior to receiving request, or having an ability to generate an appropriate network device configuration for a requesting network device is in a position to send, preferably and a push mode to the requesting the network device, configuration information to the network device once a configuration quest has been received (step 403). Therefore, the server essentially waits in a loop for configuration request to be received (step 403), and when a receives requests to configure a device (step 45) it may optionally authenticate the received request (step 407) and then determine if the requesting device should be sent a configuration information based on a network device identity ID (step 409) or based on a network policy (step 411). For either the identity-based configuration (IBC) or the policy-based configuration (PCB) the configuration information to be provided may be either obtained by a database lookup procedure or by a configuration information generation procedure where the generation is performed only upon receipt of the configuration information request.

The identity based configuration (IBC) uses an identifier that is unique to the device to identify an appropriate configuration either from an existing database that has been generated receiving the request for configuration, or to generate an appropriate configuration for the requesting device after the request for configuration information has been received by the server. In one embodiment, the policy-based configuration (PBC) primarily relies upon one or more pre-defined or dynamically determined policies that specify how for example different network device types, classes, or other parametrically defined groups of network devices are to be configured in a consistent (or even different) manner when deployed or rolled out at for example, different office locations of a corporation, different functional groups within a corporation or business, or according to any other rule set or policies.

In one embodiment the unique identifier may be selected as one or any combination of identifiers selected from the set of identifiers consisting of a device serial number, an internet protocol IP address, a Media Access Control (MAC) address, a Service Set Identifier (SSID), and any combination of two or more of these.

Independent of the type of configuration information to be sent, the configuration information is optionally but advantageously encrypted so as to prevent unauthorized interception and access to the configuration information (which may include secret information such as keys, protocols, or the like) by unauthorized parties (step 419). Finally, the management side system server sends the configuration information to requesting device (step 421) optionally but advantageously with authentication. Encryption and/or authentication are both particularly advantageous when any of the information may be communicated over an insecure link, for example over the Internet 120 or other nonsecure or external communication infrastructure. Neither authentication nor encryption are necessary parts of the invention, though a prudent network administration would virtually always choose at least to encrypt and typically to require mutual management side and device side authentication.

The management side server may optionally wait for an knowledge receipt of the sent configuration information by the requester (step 423) and then the management side procedure for one and its (step 430).

In one embodiment of the invention, a configuration success indication may optionally by advantageously be provided. In one embodiment, when the management side system receives the request for configuration from the remote network device, it immediately or within a predetermined period of time, transitions a management state of the remote network device such that a network operator, administrator, or other entity (human or machine) receives an indication of success or failure of the remote network device request. The end effect is that the operator will see the site have a first state (e.g., success state) or go "green" if the auto-configuration request and respond exchange was successful, or have a second state (e.g., failure state) and go "red" if the request and respond exchange failed. In one embodiment, a network map may be generated and optionally displayed via a graphical user interface or other graphical, symbolic, or text showing the success or failure status of the network devices. The management system also optionally provides a list of failed remote requests and allows the user to diagnose these.

In one embodiment of the invention, where a plurality of network devices may request configurations information from the management side configuration server 106, the management side configurations server may establish a queue so that requests for configuration information are placed into the queue in their order of receipt, and each request is handled serially so that the first configuration information request is placed at the head of the queue and for which configuration information is sent to the requesting network device first, then each request is handled in turn in their order of receipt. Other embodiments of the invention may for example provide for some prioritization so that certain requests determined to have a higher priority are handled out of order relative to their order of receipt. Prioritization based on any number of factors may be implemented. For example, the server may be able to identify request for configuration it should receive a higher priority based on such indicators as he device identifier, the Internet protocol address from which the request was received, and/or other factors. Preferably, the status of a configuration information request as a higher prior request, could be known to the server without the server need to decrypt, authenticate, or otherwise open or substantially process the requesting message in order to determine a priority status.

While the communication, download, or push of network device configuration information from the server to the network device has been described in general terms, the inventive system, device, and method provides additional utility and advantages where the network device is coupled with or can communicate with other network devices that also require configuration or configuration information.

For example, where the network device requesting configuration is coupled to the server and network device can receive the configuration information over that Ethernet connection. In addition, any secondary network devices that are connected to the requesting network device 108 which is referred to here as the primary network device, such secondary network devices may themselves receive their own configuration information from the primary network device and the request by any primary network device to the management side server may and in preferred embodiments will include a request for configuration information for any and all secondary network devices coupled with the primary network device.

In particular, where the primary network device making the original request for configuration information is a network switch, the management side server will not only provide configuration information for the network switch but also configuration information for access points (AP) or mobility points (MP) that are coupled or connected to (or maybe coupled or connected to) the primary network device or switch. This optional implied request for configuration information not only for the primary or requesting network device but also for the other secondary devices coupled with or connected to the primary network device may substantially reduce the number of requests made and the resulting burden on the network server 206.

The ability to acquire not only configuration information for the switch but also for access points connected to the switch at the same time means that the process of setting up and configuring an entire network much more efficient and vastly simplify as compared to any manual configuration or even answer a configuration which is performed by a network administrator remotely but in non- real-time or off-line. Furthermore, for embodiments of the invention that generate either network device identity based or policy-based configuration information upon receipt of a request, the algorithms and procedures as well the policies on which network configuration information sets are generated may be done at any time prior to their need and do not require participation of either programmers or network administrators at the time or place where the network devices are being deployed or rolled out.

In each case, this means that as each network device is physically connected and powered on it may "call home" or otherwise contact a designated engine system sides server 206 and requests its configuration information, and for a typical network receive its configuration information and have actual configuration of the network device and any secondary network devices coupled with or connected to that primary device completed within a matter of a few seconds. Even if a decision is made to completely connect all (for example 100 or more) of the network devices but not to power them on until some predetermined time, each of the network devices that have been configured to requests initial or new configuration information can send a message back to the system server in a secure manner and expect to have its request answered within a few to several minutes. The queuing mechanism at the server taking care of any concurrently received requests that are or may be received more closely in time than a response message with configuration information can be retrieved from the database and sent or generated and sent.

It will be apparent that such automated configuration provides for much quicker and cost efficient installation of not only a single network device (and possibly the secondary network devices that may be attached to that primary network device), but has particular advantages and efficiencies that scale to large numbers of new or replacement devices.

Recall that embodiments of the inventive network device 106 may include either or both a two-state button or switch that identifies the device as being in an "enable" or "disable" request configuration information on network device boot or power-on, and a software settable and resettable state than can represent either an "enable" or "disable" request configuration on boot or on power-on status for the network device.

In one embodiment, a button is provided in a recess or aperture within the housing or enclosure of the network device. The button is advantageously recessed so that it will not inadvertently be pressed during handling of the device during deployment of the device particularly if power is applied to the network device. Any type of button or switch may be used and recessing the button or switch while being recessed within a depression in the housing is desirable it is not required by all embodiments of the invention. In some embodiments of the invention, the button may be recessed to such a depth that a small pointed object such as a paper-clip tip or wire is needed to access and alter the state of the button. In one embodiment the button need only be pressed momentarily during the power-on or boot-up while in other embodiments, the button should be held for from one to several seconds during the power-on or boot-up for its actuation to have the intended effect.

In one embodiment, the network device maintains its current configuration settings that are persistently maintained or stored non-volatily in the device unless the button 116 is depressed during power-on or boot-up of the device. The alternate default, wherein the network device 108 requests new configuration unless the button is pressed may alternatively be implemented in the device, but this default condition in not preferred because it would result in increased and unnecessary burden on the management side server 106.

The software or firmware set state may equivalently be used to cause the network device 108 to request configuration information for the device (and for other devices that attach to the network through the primary (requesting) device. In one embodiment, the boot mode state is set to enable (either at the time the network device is manufactured and loaded with its software/firmware, or in preparation for device deployment or installation) so that when the network device is installed and powered on for the first time it will request configuration. On subsequent boot-up or power-on the boot mode state is set to disable so that the configuration information that had previously been loaded into the network device will be retained. In one embodiment, the boot mode state is only changed from enable to disable when configuration information was successfully loaded into the device. In one embodiment, pressing the recessed button while powered on but not during the boot-up or power-on phase will reset the network device to a predetermined configuration, such as for example a factory default or reset condition.

It may be appreciated in light of the description provided here that either a database or look-up table based identity or policy-based configuration, a database or look-up table information may be input into the database or look-up table at any time in advance of the time the configuration information is actually needed or requested. Therefore the information may be placed into the database or look-up table in the hours, days, weeks, or months preceding rollout of a system. This placement or storage of information may be done in non-real time so that it does not require the dedicated attention of an IT or network administrator. The determination, placement, and storage of the information or any part of component of the information may also be done by a third party or contractor. Certain information that is sensitive in nature may be added to the database or look-up table by a trusted entity at a later time.

Certain other conventional systems and methods may at first seem to be able to partially self-configure to a local set of signal based on pressing a button on an external surface of a device however such systems as are know to the inventors only work by sensing 802.11x wireless signals that are locally present in the environment. Devices including wireless access point devices made by the same company as a company that makes a wireless router may under some conditions be able to communicate with the wireless router and based on the mutual communication between the wireless router device and the wireless access point device, determine settings by which the two devices can communicate. These system are not able to automatically send messages to a remote server over for example an Ethernet connection, request network configuration for themselves and optionally for other devices connected to them. Neither do such conventional devices or set-up methods provide the other features described herein.

It may be appreciated that at least because the network device sends a request to a designated server to receive configuration information, the entity that is responsible for defining the configuration information (such as for example an authorized corporate network administrator) that is to sent to each network device (no matter whether pre-stored in an existing database or generated upon receiving the request) may chose the most appropriate configuration information at the time. Furthermore, the configuration information may be changed at the server from time to time as required or desired. Additionally, the network devices may themselves be controlled in a manner that new network device configuration information may be pushed or downloaded into the device as changes are required or desired, or the server or other entity may communicate a message or command to direct the network device to request updated, changed, or replacement configuration when they are next booted, or at a particular date and time, or according to other criteria.

One situation where the management side server may desire to alter an existing and operating network device is when the network device may have initially obtained a network IP address from a Dynamic Host Configuration Protocol mechanism or DHCP. DHCP is a protocol that assigns a dynamic IP address to a device on a network and can even support a mixture of static and dynamic IP addresses.

In some instances the existence of a network device using a DHCP based IP address may be problematic, or even when not problematic, there may be a desirability for all network devices on a network to operate with a fixed IP address. Therefore, in one embodiment of the invention the management side system configuration server may act to assign a fixed IP address to a requesting network device event when the network device is behaving properly and without problem with its DHCP based IP address. (It is also possible within the context of the invention to permit a network device having a fixed IP address to acquire a DHCP IP address, but this scenario is not of particular interest here.)

In one embodiment of the invention, the network device communicates a request for configuration information to the server and the server receives that request in the manner described elsewhere in this specification. The management side system may then examine certain fields, statements, or other data or indicators of or within the request message (or any attachment to the request message) to look at certain fields of the request. These fields may for example include any one or combination of: a current IP address that the device is on, and an indicator that identifies whether the device has obtained its current IP address from DHCP or by static IP address configuration. If the management side system determines that the requesting network device has a static IP address and it wants the network device to continue to have a static IP address, then it may take no action so that static address remains unchanged or it may assign a different static IP address that will be communicated to the network device with its requested configuration information and used subsequently by the network device and the management side (including the management side server) for their communication. On the other hand if the management side system determines that the requesting device is using a DHCP address and wants the network device to use a static IP address, it may send (to the DHCP IP address) the desired new static IP address for use by the requesting network device in the configuration information. The new static IP address will thereafter be used for communications between the network device and the management side server or other entities on the network.

The invention therefore provides considerable flexibility for either a signal network device or a multiplicity of network devices to find an IP address such as using DHCP that will permit them to first come up on a network and to send and receive network messages, without them remaining tied to a particular IP address or to a dynamically determined IP address, and then have their IP address changed for example to a management side static IP address to suit the management side systems preferences. The system and method therefore also include a management side intelligent component that for example permits the management side to recognize that an initial message (or even subsequent message) came to the management side server using a particular DHCP based IP address, sends out new network device configuration information to the requesting device using the then current particular DHCP based IP address, and then updates its records or information so that it will conduct future communications with the network device using the newly assigned static IP address that was included in the configuration information.

Attention is now directed to some other and/or additional characteristics and features of the inventive network device.

The network device itself (such as for example in a wireless network switch device), when it boots up, has to recognize when to go and request and then get its configuration information and when not to go get it. Advantageously, the network device may not want to go and get the configuration again on every boot (although this operation is not precluded) or after every power failure that may occur. While this may not present any issues for either the device itself or the network or server, if every one of perhaps 200 network devices in a facility were to request new configuration information after a momentary power failure on a hot summer day, it would add to the network traffic burden on the network and on the processing and/or other content serving by the server. In order to handle this the network device booting or power-up situation, a small button, toggle, switch or other means for altering a state between a request configuration information first state (enable) and a do not request configuration information second state (disable) which when placed in a first position (such as being pressed or depressed) while booting will initiate the special booting sequence or program that retrieves the device configuration. When placed in a second position (such as by being left in a non-pressed or extended position) does not initiation a booting sequence, or bypasses program code, that would otherwise request configuration information form an external source. This allows the network device, such as a switch to either use its existing configuration data set, or reset and fetch and obtain a new configuration data set ("config") at any point or time. Note that computer program software commands may be used to alter the state of a stored flag, token, data item, or other logic to effect the same function as the physical switch.

Furthermore, but optionally, if there is a network administrator or other person or entity available that may be able to understand and make changes to the network device program or data stored within the network device either before the network device is sent to the installation site (pre-shipment boot mode setting) or at the installation site (pre-installation boot mode setting), that person can utilize a command line interface (CLI) to set the network device into the automated configuration request mode (e.g., "configure me" or "drop-ship" mode versus a retain existing configuration mode) so that the need to press a button during the power-on and automatic boot procedure is removed and it is only necessary to connect a network connection (such as for example an Ethernet cable) and apply electrical power, and otherwise the auto-configuration is completely automated and touchless. In other words, the there is an equivalent mechanism in software within the network device that sets the boot mode or results in execution of software and/or firmware to execute in the network device (such as in a processor, ASIC, or other logic of the network device) of the button pressing mechanism For example, in one embodiment there is a specific software command, such as "set autoconfig=enable", and once this is set and the network device is booted with this autoconfig=enable set, the network device will request configuration information on that first boot. After this first boot after the auto configuration is enabled, the mode is returned to disable so that subsequent power-on will not result in new configuration information requests. As described elsewhere herein, this means that when the autoconfig = "enable" is set before shipping a replacement network device to a remote location where no or minimal technical support is available, it is only necessary to substitute the replacement unit for the failed unit, including unplugging and replugging a simple Ethernet cable and power cable. When the replacement unit is powered on it will sense the autoconfig=enable mode that has been set in the device, and cause the replacement network device to get its own configuration information from the network. The person performing the replacement need have no technical knowledge or idea of what is happening. It is essentially as simple as plugging in a standard telephone handset.

In one embodiment, once it has retrieved its configuration information, data, or file, this autoconfig setting is disabled so that the next time it boots it need not go out and request its configuration again. In another embodiment, once the autoconfig is set to enable, it holds this setting until changed or reset so that the device will request its configuration each time it boots. This approach is not preferred as it would unnecessarily increase the burden on the network and the server.

The invention also provides a computer program and computer program product that includes a program module having instructions and optional data and/or parameters for execution in a processing logic to carry out the inventive methods and procedures described herein. For example, the methods described herein and illustrated for example in FIG. 2, FIG. 4, and FIG. 5 may be performed as software executing within a processor or processing logic of the network device (device side procedure), with a processor or processing logic of the management side such as by a management side server computer (management side procedure), or by a combination of both of these. A variety of types of processors, microprocessors, ASICs, and associated or coupled memory may be utilized in the management side server and network device to accomplish the required processing tasks.

In one embodiment of the invention the protocol used for the communications between the network device and the management side server is an XML-based protocol over http. The inventive scheme may also or alternatively be used with different language or protocol, such as for example, but not limited to a SNMP, CMET or any other protocol and need not be performed with or limited to XML.

Unless the context clearly requires otherwise, throughout the description and the claims, the words "comprise," "comprising" and the like are to be construed in an inclusive sense as opposed to an exclusive or exhaustive sense; that is to say, in a sense of "including, but not limited to." Words using the singular or plural number also include the plural or singular number, respectively. Additionally, the words "herein," "above," "below," and words of similar import, when used in this application, shall refer to this application as a whole and not to any particular portions of this application.

The above detailed description of embodiments of the invention are not intended to be exhaustive or to limit the invention to the precise form disclosed above. While specific embodiments of, and examples for, the invention are described above for illustrative purposes, the scope of the invention being defined by the appended claims.

## Claims

1. A method for configuring a remote device, the method comprising:
coupling (304) a network device to a network;
activating (306) the network device, so that the network device is in a request configuration state;
sending (310) from the network device to the network a configuration data set request message including a device identifier associated with the network device;
receiving (314) by the network device from the network a configuration data set associated with the device identifier, wherein the configuration data set comprises configuration information that identifies attributes of users or client devices that are permitted to access the network from or through the network device;
loading (318) the configuration data set into a non-volatile configuration storage within the network device, the configuration data set further comprises further configuration information defining relationships between the network device and other devices coupled to, or which can communicate with, the network, wherein the further configuration information enables a user or client device from said users or client devices to maintain access to the network when roaming from the network device to another device among said other devices.

2. A method as in claim 1, wherein the device identifier information includes information selected from the set consisting of a unique device identifier, a device serial number, a device Internet protocol, IP, address, a device class, a device site, a device location, a netmask, a network identifier, a device type to be configured, a software version identifier, a firmware version identifier, a data of manufacture, a Dynamic Host Configuration Protocol, DHCP, source indicator, a pre-configuration fixed address indicator, a serial identifier, SID, an IP address, a media access control, MAC, address, a service set identifier, SSID, and any combination of these.

3. A method as in claim 1 or 2, wherein activating the device includes an activation selected from the set of activations consisting of:
powering on the network device;
resetting the network device;
booting or rebooting the network device;
power-cycling the network device;
having a network configuration request button depressed;
any combination of these.

4. A method as in claims 1, 2, or 3 further comprising:
identifying a receiver uniquely identified in a persistent non-volatile memory coupled to the network device;
finding a management server on the network by sending a message to the uniquely identified receiver.

5. A method as in claims 1, 2, 3, or 4 further comprising:
coupling the network device to a wired network;
applying electrical power to the network device.

6. A method as in claims 1, 2, 3, 4, or 5 further comprising:
sending the configuration data set request using mutual authentication and encryption/decryption;
receiving the configuration data set using mutual authentication and encryption/decryption;
wherein the mutual authentication includes the exchange of user identity and passwords;
wherein the encryption/decryption involves the use of a key.

7. A method as in claims 1, 2, 3, 4, 5, or 6 further comprising:
changing the state of a switch selected from the group of switches consisting of a physical hardware switch, a physical button that is pressed down when the network device is booted, a physical button that is pressed down when the network device is powered on, a logical switch, and a software switch, wherein changing the state of the switch activates the request configuration data set state;
changing the state of the switch to activate a do not request configuration data set state.

8. A network device (108, 132), comprising:
a non-volatile storage (110); and
a logic circuit (228) having a programmable logic state that is configured to, in response to the network device being coupled to a network and activated in a request configuration state, to cause the network device to:
send from the network device to a network (120) a configuration data set request message including a device identifier associated with the network device;
receive by the network device from the network a configuration data set associated with the device identifier, wherein the configuration data set comprises configuration information that identifies attributes of users or client devices that are permitted to access the network from or through the network device;
load the configuration data set into the non-volatile storage, the configuration data set further comprises further configuration information defining relationships between the network device and other devices coupled to, or which can communicate with, the network, wherein the further configuration information enables a user or client device from said users or client devices to maintain access to the network when roaming from the network device to another device among said other devices.

9. A network device as in claim 8, wherein the programmable logic state is further configured to cause the network device to carry out the method of any of claims 2 to 7.

## Patentansprüche

1. Verfahren zum Konfigurieren einer entfernten Vorrichtung, wobei das Verfahren umfasst:
Koppeln (304) einer Netzwerkvorrichtung mit einem Netzwerk;
Aktivieren (306) der Netzwerkvorrichtung, derart dass die Netzwerkvorrichtung in einem Konfiguration-anfordern-Zustand ist;
Senden (310) einer Konfigurationsdatensatz-Anforderungsnachricht, die eine Vorrichtungskennung umfasst, die mit der Netzwerkvorrichtung assoziiert ist, von der Netzwerkvorrichtung an das Netzwerk;
Empfangen (314) eines Konfigurationsdatensatzes, der mit der Vorrichtungskennung assoziiert ist, durch die Netzwerkvorrichtung vom Netzwerk, wobei der Konfigurationsdatensatz Konfigurationsinformationen umfasst, die Attribute von Benutzern oder Client-Vorrichtungen identifizieren, die zum Zugang zum Netzwerk von der oder durch die Netzwerkvorrichtung berechtigt sind;
Laden (318) des Konfigurationsdatensatzes in einen nichtflüchtigen Konfigurationsspeicher innerhalb der Netzwerkvorrichtung, wobei der Konfigurationsdatensatz ferner weitere Konfigurationsinformationen umfasst, die Beziehungen zwischen der Netzwerkvorrichtung und anderen Vorrichtungen definieren, die mit dem Netzwerk gekoppelt sind oder damit kommunizieren können, wobei die weiteren Konfigurationsinformationen einen Benutzer oder eine Client-Vorrichtung von den Benutzern oder Client-Vorrichtungen bei Roaming von der Netzwerkvorrichtung zu einer anderen Vorrichtung unter den anderen Vorrichtungen zum Bewahren von Zugang zum Netzwerk befähigen.

2. Verfahren nach Anspruch 1, wobei die Vorrichtungskennungsinformationen Informationen umfassen, die aus dem Satz bestehend aus einer eindeutigen Kennung der Vorrichtung, einer Seriennummer der Vorrichtung, einer Internetprotokoll(IP)-Adresse der Vorrichtung, einer Vorrichtungsklasse, einem Vorrichtungsstandort, einer Vorrichtungsposition, einer Netzmaske, einer Netzwerkkennung, einem zu konfigurierenden Vorrichtungstyp, einer Softwareversionskennung, einer Firmwareversionskennung, Herstellungsdaten, einem "Dynamic Host Configuration Protocol"(DHCP)-Quellenindikator, einem Vorkonfiguration-Festadressenindikator, einer Serienkennung (SID), einer IP-Adresse, einer Medienzugriffssteuerungs (MAC)-Adresse, einer Dienstsatzkennung (SSID) und einer beliebigen Kombination derselben ausgewählt werden.

3. Verfahren nach Anspruch 1 oder 2, wobei das Aktivieren der Vorrichtung eine Aktivierung umfasst, die ausgewählt wird aus dem Satz von Aktivierungen bestehend aus:
Einschalten der Netzwerkvorrichtung;
Rücksetzen der Netzwerkvorrichtung;
Booten oder Rebooten der Netzwerkvorrichtung;
Aus- und Wiedereinschalten der Netzwerkvorrichtung;
Niedergedrückthalten einer Netzwerkkonfigurationsanforderungstaste;
einer beliebigen Kombination derselben.

4. Verfahren nach Anspruch 1, 2 oder 3, ferner umfassend:
Identifizieren eines Empfängers, der in einem persistenten nichtflüchtigen Speicher, der mit der Netzwerkvorrichtung gekoppelt ist, eindeutig identifiziert ist;
Suchen nach einem Verwaltungsserver im Netzwerk durch Senden einer Nachricht an den eindeutig identifizierten Empfänger.

5. Verfahren nach Anspruch 1, 2, 3 oder 4, ferner umfassend:
Koppeln der Netzwerkvorrichtung mit einem drahtgebundenen Netzwerk;
Anlegen von elektrischer Leistung an die Netzwerkvorrichtung.

6. Verfahren nach Anspruch 1, 2, 3, 4 oder 5, ferner umfassend:
Senden der Konfigurationsdatensatzanforderung anhand gegenseitiger Authentifizierung und Verschlüsselung/Entschlüsselung;
Empfangen des Konfigurationsdatensatzes anhand gegenseitiger Authentifizierung und Verschlüsselung/Entschlüsselung;
wobei die gegenseitige Authentifizierung den Austausch von Benutzeridentität und Kennwörtern umfasst;
wobei die Verschlüsselung/Entschlüsselung die Verwendung eines Schlüssels einbezieht.

7. Verfahren nach Anspruch 1, 2, 3, 4, 5 oder 6, ferner umfassend:
Ändern eines Zustands eines Schalters, der aus der Gruppe bestehend aus einem physischen Hardwareschalter, einer physischen Taste, die niedergedrückt wird, wenn die Netzwerkvorrichtung gebootet wird, einer physischen Taste, die niedergedrückt wird, wenn die Netzwerkvorrichtung eingeschaltet wird, einem logischen Schalter und einem Softwareschalter ausgewählt wird, wobei das Ändern des Zustands des Schalters den Konfigurationsdatensatz-anfordern-Zustand aktiviert;
Ändern des Zustands des Schalters, um einen Konfigurationsdatensatz-nicht-anfordern-Zustand zu aktivieren.

8. Netzvorrichtung (108, 132), umfassend:
einen nichtflüchtigen Speicher (110); und
eine Logikschaltung (228) mit einem programmierbaren Logikzustand, der so konfiguriert ist, dass er in Reaktion auf ein Koppeln der Netzwerkvorrichtung mit einem Netzwerk und eine Aktivation der Netzwerkvorrichtung in einem Konfiguration-anfordern-Zustand die Netzwerkvorrichtung veranlasst zum:
Senden einer Konfigurationsdatensatz-Anforderungsnachricht, die eine Vorrichtungskennung umfasst, die mit der Netzwerkvorrichtung assoziiert ist, von der Netzwerkvorrichtung an ein Netzwerk (120);
Empfangen eines Konfigurationsdatensatzes, der mit der Vorrichtungskennung assoziiert ist, durch die Netzwerkvorrichtung vom Netzwerk, wobei der Konfigurationsdatensatz Konfigurationsinformationen umfasst, die Attribute von Benutzern oder Client-Vorrichtungen identifizieren, die zum Zugang zum Netzwerk von der oder durch die Netzwerkvorrichtung berechtigt sind;
Laden des Konfigurationsdatensatzes in den nichtflüchtigen Speicher, wobei der Konfigurationsdatensatz ferner weitere Konfigurationsinformationen umfasst, die Beziehungen zwischen der Netzwerkvorrichtung und anderen Vorrichtungen definieren, die mit dem Netzwerk gekoppelt sind oder damit kommunizieren können, wobei die weiteren Konfigurationsinformationen einen Benutzer oder eine Client-Vorrichtung von den Benutzern oder Client-Vorrichtungen bei Roaming von der Netzwerkvorrichtung zu einer anderen Vorrichtung unter den anderen Vorrichtungen zum Bewahren von Zugang zum Netzwerk befähigen.

9. Netzwerkvorrichtung nach Anspruch 8, wobei der programmierbare Logikzustand ferner so konfiguriert ist, dass er die Netzwerkvorrichtung zum Durchführen des Verfahrens nach einem der Ansprüche 2 bis 7 veranlasst.

## Revendications

1. Procédé de configuration d'un dispositif distant, le procédé comprenant :
le couplage (304) d'un dispositif de réseau à un réseau ;
l'activation (306) du dispositif de réseau, de telle sorte que le dispositif de réseau se trouve dans un état de demande de configuration ;
l'envoi (310) depuis le dispositif de réseau au réseau d'un message de demande d'ensemble de données de configuration comportant un identifiant de dispositif associé au dispositif de réseau ;
la réception (314) par le dispositif de réseau depuis le réseau d'un ensemble de données de configuration associé à l'identifiant de dispositif, l'ensemble de données de configuration comprenant des informations de configuration qui identifient des attributs d'utilisateurs ou de dispositifs clients qui sont autorisés à accéder au réseau depuis le dispositif de réseau ou par le biais de celui-ci;
le chargement (318) de l'ensemble de données de configuration dans une mémoire de configuration rémanente dans le dispositif de réseau, l'ensemble de données de configuration comprenant en outre d'autres informations de configuration définissant des relations entre le dispositif de réseau et d'autres dispositifs couplés au réseau, ou qui peuvent communiquer avec ce dernier, dans lequel les autres informations de configuration permettent à un utilisateur ou dispositif client parmi lesdits utilisateurs ou dispositifs clients de maintenir l'accès au réseau lors d'une itinérance depuis le dispositif de réseau vers un autre dispositif parmi lesdits autres dispositifs.

2. Procédé selon la revendication 1, dans lequel les informations d'identifiant de dispositif comportent des informations sélectionnées dans l'ensemble consistant en un identifiant de dispositif unique, un numéro de série de dispositif, une adresse de protocole Internet (IP) de dispositif, une classe de dispositif, un site de dispositif, un emplacement de dispositif, un masque réseau, un identifiant de réseau, un type de dispositif à configurer, un identifiant de version logicielle, un identifiant de version de micrologiciel, une date de fabrication, un indicateur de source de protocole de configuration d'hôte dynamique, DHCP, un indicateur d'adresse fixe de préconfiguration, un identifiant de série (SID), une adresse IP, une adresse de commande d'accès au support (MAC), un identifiant d'ensemble de services (SSID), et n'importe quelle combinaison de celles-ci.

3. Procédé selon la revendication 1 ou 2, dans lequel l'activation du dispositif comporte une activation sélectionnée dans l'ensemble d'activations consistant en :
la mise sous tension du dispositif de réseau ;
la remise à zéro du dispositif de réseau ;
l'amorçage ou le réamorçage du dispositif de réseau ;
le cyclage en puissance du dispositif de réseau ;
la pression d'un bouton de demande de configuration de réseau ;
n'importe quelle combinaison de celles-ci.

4. Procédé selon la revendication 1, 2 ou 3, comprenant en outre :
l'identification d'un récepteur identifié de manière unique dans une mémoire rémanente persistante couplée au dispositif de réseau ;
la recherche d'un serveur de gestion sur le réseau en envoyant un message au récepteur identifié de manière unique.

5. Procédé selon la revendication 1, 2, 3, ou 4 comprenant en outre :
le couplage du dispositif de réseau à un réseau filaire ;
l'application d'une puissance électrique au dispositif de réseau.

6. Procédé selon la revendication 1, 2, 3, 4, ou 5 comprenant en outre :
l'envoi de la demande d'ensemble de données de configuration à l'aide d'une authentification mutuelle et d'un cryptage/décryptage ;
la réception de l'ensemble de données de configuration à l'aide d'une authentification mutuelle et d'un cryptage/décryptage ;
dans lequel l'authentification mutuelle comporte l'échange d'une identité d'utilisateur et de mots de passe ;
dans lequel le cryptage/décryptage implique l'utilisation d'une clé.

7. Procédé selon la revendication 1, 2, 3, 4, 5, ou 6 comprenant en outre :
le changement de l'état d'un commutateur sélectionné dans le groupe de commutateurs consistant en un commutateur matériel physique, un bouton physique qui est pressé quand le dispositif de réseau est amorcé, un bouton physique qui est pressé quand le dispositif réseau est mis sous tension, un commutateur logique, et un commutateur logiciel, dans lequel le changement de l'état du commutateur active l'état de demande d'ensemble de données de configuration ;
le changement de l'état du commutateur pour activer un état de non-demande d'un ensemble de données de configuration.

8. Dispositif de réseau (108, 132), comprenant:
une mémoire rémanente (110) ; et
un circuit logique (228) présentant un état logique programmable qui est configuré pour, lorsque le dispositif de réseau est couplé à un réseau et activé dans un état de configuration de demande, amener le dispositif de réseau à :
envoyer depuis le dispositif de réseau à un réseau (120) un message de demande d'ensemble de données de configuration comportant un identifiant de dispositif associé au dispositif de réseau ;
recevoir par le dispositif de réseau depuis le réseau un ensemble de données de configuration associé à l'identifiant de dispositif, l'ensemble de données de configuration comprenant des informations de configuration qui identifient des attributs d'utilisateurs ou de dispositifs clients qui sont autorisés à accéder au réseau depuis le dispositif de réseau ou par le biais de celui-ci ;
charger l'ensemble de données de configuration dans la mémoire de configuration rémanente, l'ensemble de données de configuration comprenant en outre d'autres informations de configuration définissant des relations entre le dispositif de réseau et d'autres dispositifs couplés au réseau, ou qui peuvent communiquer avec ce dernier, dans lequel les autres informations de configuration permettent à un utilisateur ou dispositif client parmi lesdits utilisateurs ou dispositifs clients de maintenir l'accès au réseau lors d'une itinérance depuis le dispositif de réseau vers un autre dispositif parmi lesdits autres dispositifs.

9. Dispositif de réseau selon la revendication 8, dans lequel l'état logique programmable est configuré en outre pour amener le dispositif de réseau à exécuter le procédé selon l'une quelconque des revendications 2 à 7.
